## Europäisches Patentamt
## European Patent Office
## Office européen des brevets

(11) Publication number: **0 018 186**
A1

# EUROPEAN PATENT APPLICATION

(21) Application number: 80301177.4

(22) Date of filing: 11.04.80

(51) Int. Cl.³: **H 02 H 7/122,** H 02 M 1/18, H 02 P 13/22, G 05 F 1/58

(30) Priority: 12.04.79 GB 7912953

(71) Applicant: **GOULD ADVANCE LIMITED, Roebuck Road, Hainault, Essex (GB)**

(72) Inventor: **Bardos, Peter Andrew, 55 Havers Lane, Bishop's Stortford, Hertfordshire (GB)**
Inventor: **Murton, Robert Graham, 7 Proctors Way, Bishop's Stortford Hertfordshire (GB)**
Inventor: **Newland, Peter Leslie, 18 Cherry Garden Lane, Newport, Essex (GB)**
Inventor: **Farrer, Michael, 27 Havers Lane, Bishop's Stortford, Hertfordshire (GB)**

(43) Date of publication of application: 29.10.80
Bulletin 80/22

(74) Representative: **Crawford, Andrew Birkby et al, A.A. THORNTON & CO. Northumberland House 303-306 High Holborn, London WC1V 7LE (GB)**

(84) Designated Contracting States: **DE FR GB IT SE**

(54) Improved inverter circuit.

(57) A blocking oscillator forward inverter comprises a transistor oscillator including a transistor (20) connected to a coupling transformer (10) which is arranged to provide oscillation maintaining feedback from a winding (11) connected to the collector of the transistor (20) to a winding (13) connected in the base circuit of the transistor (20). A voltage limiting circuit (40, 50, 56) is connected to the output winding (12) of the transformer and acts to limit the overswing voltage appearing at the collector of the transistor (20) by providing a voltage sink effect which controls the period of non-conduction of the transistor (20) within each operating cycle.

EP 0 018 186 A1

0018186

- 1 -

Improved Inverter Circuit.

This invention relates to improved inverter circuits.

In one known arrangement of this kind, which is arranged to be driven by a continuous train of input pulses, recurrent at a constant repetition rate, a transistor has its collector-emitter path connected across a direct-current source in series with the primary winding of a transformer which has a secondary winding from which an alternating-current output is taken and a tertiary winding connected between base and emitter of the transistor. The drive pulses are applied between base and emitter of the transistor, in such a polarity that each pulse turns on the transistor. In a known modification of the arrangement described above the necessity for drive pulses is overcome by arranging that the transistor is turned on when the core resets. This may be done by connecting an appropriate network, such as a parallel combination of resistance and capacitance, between the tertiary winding of the transformer and the transistor base, and by returning the base to the pole of the direct-current source which is connected to one terminal of the transformer primary winding.

These known arrangements have the characteristic that they require few components and that automatic stabilization of the a.-c. output against changes in input voltage is obtained to a certain extent.

The present invention seeks to provide improved inverters of this general kind having more precise stabilization and in which stabilization against other parameters such as output voltage and/or current changes may also be obtained.

The invention provides an improved inverter comprising an oscillator including a semiconductor switch such as / a coupling transformer arranged to provide
                   a transistor,
oscillation maintaining feedback from collector circuit to base circuit of the transistor and in which a circuit is provided whereby the overswing voltage applied to the collector of the transistor is limited so as to control the non-conductive period of the transistor within each operating cycle. This is preferably achieved by extending the reset or off period of each operating cycle as a result of the overswing voltage limiting.

The invention will be better understood from the following description of prior art and of embodiments of the invention, given with reference to the accompanying drawings, in which:

Figure 1 is a circuit diagram of a known pulse-driven inverter;

Figure 2 is an illustration of voltage waveforms appearing during the operation of the circuit arrangement of Figure 1;

Figure 3 is a circuit diagram of a known self-oscillating inverter;

Figure 4 is a waveform diagram illustrating the operation of the arrangement described with reference to Figure 3;

Figures 5a and 5b are waveform diagrams illustrating the basis of the present invention;

Figure 6 is a circuit diagram of one embodiment of inverter in accordance with the invention;

Figure 7 is a circuit diagram of a further embodiment of inverter in accordance with the invention;

Figure 8 is a circuit diagram of another embodiment of inverter in accordance with the invention;

Figure 9 is a circuit diagram illustrating an advantageous modification of the inverter described with reference to Figure 7; and

Figure 10 is a circuit diagram illustrating a still further embodiment of the invention.

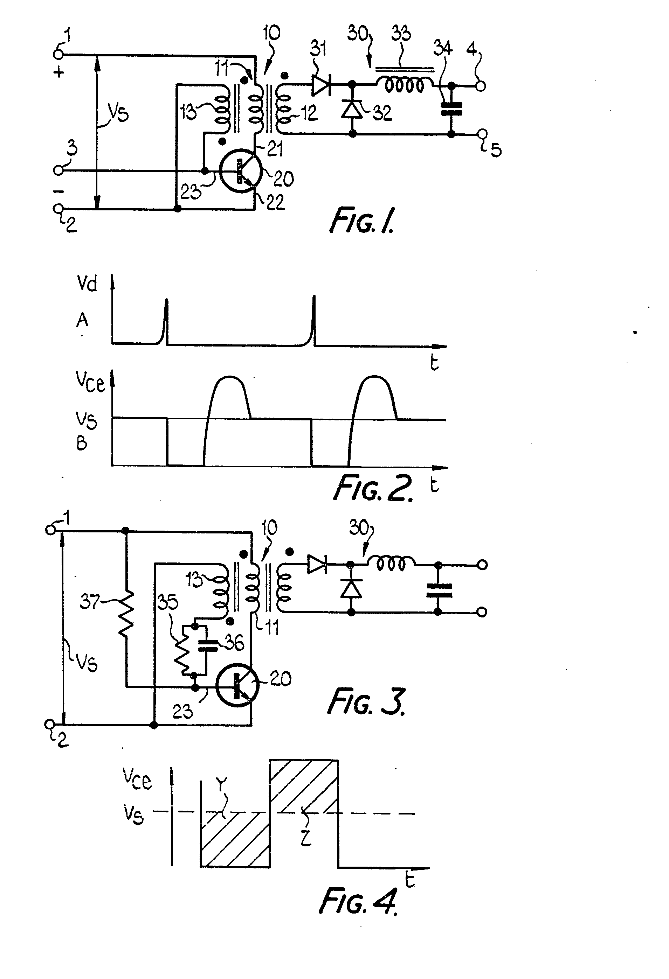

In the circuit arrangement shown in Figure 1 a d.-c. source Vs is connected to terminals 1(+) and 2(-). The primary winding 11 of a transformer 10 is connected across terminal 1 and 2, in series with the emitter-collector path of a transistor 20, of which the collector 21 is connected to one terminal of transformer winding 11, the emitter 22 is connected to negative terminal 2 and the base 23 is connected to a drive input terminal 3. Transformer 10 has a secondary winding 12 from which a d.-c. supply is obtained by means of a rectifying and integrating circuit 30 comprising diodes 31, 32 each of which has its anode connected to one terminal of secondary winding 12 and which have their cathodes commoned. The pulsating d.-c. output is integrated by means of a choke or inductor 33 connected between the commoned cathodes of diodes 31, 32 and the positive output terminal 4 and a capacitor 34 connected between the output terminals 4, 5, of which the latter is connected directly to one terminal of transformer winding 12.

Transformer 10 also has a tertiary or feedback winding 13 of which one terminal is connected to transistor base 23 and the other is connected to the negative supply terminal 2 and thus also to transistor emitter 22.

The operation of this known arrangement will now be described with reference also to Figure 2, in which the upper graph A illustrates the variation with time of a voltage Vd representing the drive pulses applied between terminals 2 and 3 and the lower graph B illustrates the variation of collector-emitter voltage Vce during operation.

Initially, transistor 20 is turned off and the collector 21 of the transistor is therefore at the supply potential $V_s$. The drive pulses A are applied between base and emitter of transistor 20 in such a polarity (base positive-going) that the transistor is turned on and the collector-emitter voltage falls abruptly to zero. This condition is maintained/while by the voltage developed in winding 13 the current in transformer primary winding 11 increases linearly, until core saturation occurs, whereupon the voltage developed in tertiary winding 13 collapses and transistor 20 turns off.

The voltage between collector and emitter then rises to the level of the supply voltage and immediately thereafter performs a semi-sinusoidal oscillation. After the collector-emitter voltage has thus returned to the level of the supply voltage conditions remain constant until the next drive pulse is received.

Figure 3 shows a known modification of the circuit arrangement of Figure 1 in which it is arranged that the transistor is turned on when the transformer resets, that is, when the core has returned to its initial condition. / The only differences from the circuit This circuit is sometimes known as a blocking oscillator forward inverter. arrangement of Figure 1 are that instead of one terminal of tertiary winding 13 being connected directly to the base 23 of transistor 20, it is connected thereto by way of a parallel combination of a resistor 35 and a capacitor 36 and that instead of being taken to drive input terminal 3, base 23 is returned to positive supply terminal 1 by way of a resistor 37.

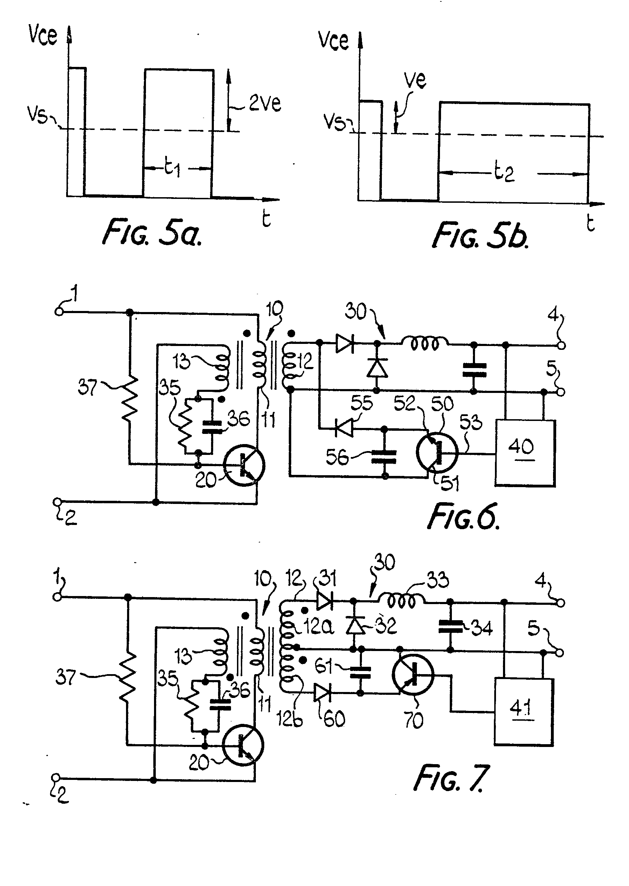

Figure 4 shows the change produced in the variation of collector-emitter voltage Vce during the operating cycle. The operation is necessarily such that the shaded areas Y and Z between the voltage curve and the horizontal line representing the level Vs of the supply voltage are equal.

The invention provides an improvement upon the prior art described above and will initially be described with reference to Figures 5a and 5b. The object of the invention is to obtain a stabilized output by controlling the overswing, that is the excursion above the supply voltage Vs, of the collector-emitter voltage, that is, by controlling this overswing to an automatically adjusted mean level. Since, as has been stated in the description of the circuit shown in Figure 2, the areas between the voltage curve and the supply voltage level must be equal, it will be understood that changing the level at which the overswing is controlled will produce a change in the time during which the overswing persists. Thus Figure 5a shows a condition in which the collector-emitter voltage Vce is controlled at a mean value $Vs + 2 Ve$, which yields an overswing of duration $t_1$, while Figure 5b shows a condition in which the overswing is controlled to a mean value $Vs + Ve$, yielding an overswing of duration $t_2 = 2t_1$. An inverter operating in this manner yields pulses of constant duration at a repetition rate that varies inversely with the duration of overswing, so that if the overswing limiting level is suitably controlled, variations in output may be automatically removed.

Figure 6 shows one embodiment of a circuit arrangement in accordance with the invention. A blocking oscillator circuit identical with that of Figure 3 is employed, and this portion of the circuit, and the rectifier arrangement which is identical with that of Figures 1 and 3, will not be further described. The arrangement of Figure 6, however, further includes a comparator circuit 40 of known kind in which the output d.-c. voltage appearing between terminals 4 and 5 is compared with a reference voltage and the resultant error signal is applied between the emitter 52 and base 53 of an additional transistor 50 of which the emitter 52 is connected by way of a diode 55 to one terminal of transformer secondary winding 12 and the collector 51 is connected directly to the other terminal of the secondary winding. The emitter-collector path of transistor 50 is shunted by a capacitor 56, which is charged by way of diode 55 and is discharged through transistor 50. The rate of discharge is controlled by the voltage applied by comparator 40 between the base and emitter of the transistor, so that the drop in voltage on capacitor 56 during the pulses from the blocking oscillator is controlled in accordance with the variation in the inverter output voltage, in such a manner that a drop in output voltage reduces the rate of discharge of the capacitor and thus increases the voltage at which the overswing excursion is limited. This in turn increases the repetition rate of the oscillator pulses and thus tends to increase the output voltage, yielding the desired stabilization action. The opposite effect occurs should the output voltage rise, i.e. the voltage limit for the overswing voltage is reduced, thereby decreasing the repetition rate and tending to reduce the output voltage.

The general requirement is that a voltage sink effect be provided for the signal derived from the diode 55 so as to limit the peak overswing collector voltage of the transistor 20. In the circuit shown in Figure 6, this voltage sink effect is achieved by the connection of the capacitor 56 between the collector and emitter terminals of the transistor 50, thereby converting the possibly current sink characteristics of the transistor into the required voltage sink. If transistor 50 is driven in a common-collector mode, it becomes an inherently constant voltage sink and capacitor 56 is then not necessary.

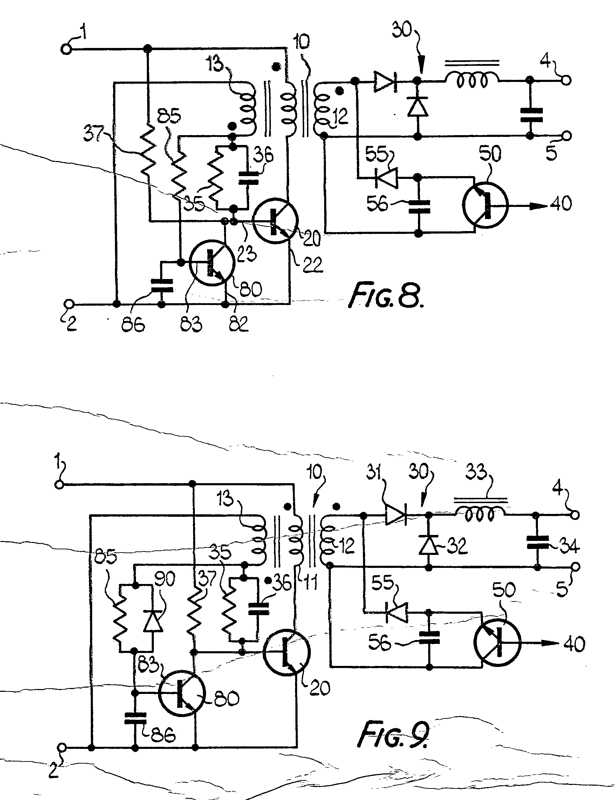

Figure 7 shows a circuit arrangement similar to that of Figure 6, save that in this case transformer secondary winding 12 is tapped, the rectified output being derived from one section 12a of the winding by means of rectifying and smoothing circuit 30, as before, while the other section 12b of the secondary winding is connected by way of a diode 60, inverted as compared with diode 55, to a parallel combination of a capacitor 61 and a transistor 70, which in this case is a pnp transistor, instead of the npn transistor 50 used in Figure 6. Transistor 70 is controlled by a comparator 41 which differs from comparator 40 in yielding an error signal of opposite polarity. The operation of this arrangement is substantially identical with that of the circuit arrangement of Figure 6 and will not be further described.

It is an advantage of the arrangements described with reference to Figures 6 and 7 that the control circuitry is isolated by the transformer 10 from the blocking oscillator circuit and its supply.

However the circuits described above in relation to Figures 6 and 7 are arranged so that conduction in the transistor is terminated by saturation of the transformer or by the base current decreasing to a level at which the transistor can no longer pass the current required by the transformer. A further improvement can be obtained by the addition of a resetting transistor to determine the end of the operating cycle. Such an arrangement is shown in Figure 8, where components having the same disposition and functions as those of Figure 6 or 7 are given the same reference numerals and will not be further described. In this case, however, the base 23 of transistor 20 is connected to the emitter 22 of that transistor by way of the collector-emitter path of a resetting transistor 80, of which the base is returned by way of a resistor 85 to that terminal of tertiary winding 13 of transformer 10 which is connected by way of parallel resistance/capacitance combination 35, 36 to the base of transistor 20. The base 83 of transistor 80 is connected to the emitter 82 of that transistor by way of a capacitor 86. The values of resistor 85 and capacitor 86 are selected so that prior to saturation of transformer 10, transistor 80 is turned on to provide a definite and abrupt end to the working cycle. As a result, the duration of each pulse can be determined more accurately and is not dependent on the individual saturation characteristics of the particular transformer.

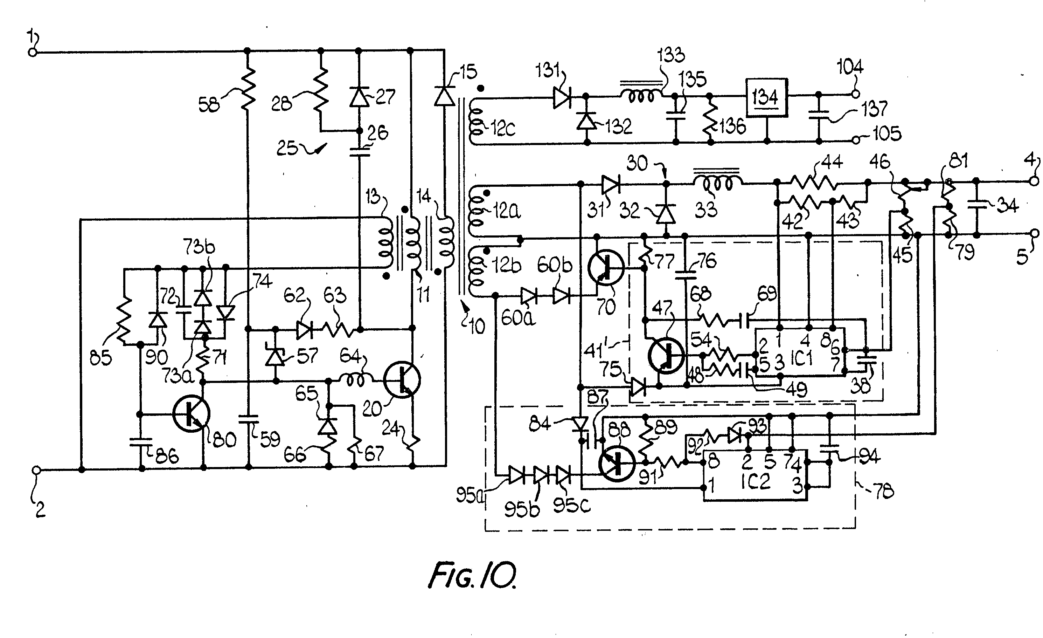

Figure 9 shows a variation of the circuit arrangement of Figure 8, in that a diode 90 is connected in parallel with resistor 85, the polarity of this diode being such that it becomes conductive when the transistor base 83 becomes positive with respect to the potential at the other end of resistor 85.

This arrangement has the effect of resetting the base voltage of transistor 80 to a negative potential varying in accordance with the voltage on capacitor 56. This voltage, which represents the control signal for the inverter, now modulates the "OFF" time of the blocking oscillator, as previously described, and also controls the "ON" time, since this latter period will be terminated when the base voltage of transistor 80 reaches a potential of approximately +0.6 V with respect to the emitter, starting from the negative voltage initially applied to it during the reset period. A decrease in the voltage

0018186

- 9 -

across capacitor 56 will thus result in a decrease in
the "ON" time and an increase in the "OFF" time, so
that the blocking oscillator will now operate at a substantially constant repetition rate, but with a mark-space
ratio or duty cycle varying in accordance with the load
on the inverter so as to produce a stabilized output
voltage.

A further circuit is shown in Figure 10, this
circuit being similar in general configuration to that
of Figure 7 on the output side and to that of Figure 9
regarding the control of the resetting transistor 80.
Components having the same disposition and functions as
those previously referred to are given the same reference
numerals and will not be further described. In this case,
however, the collector of transistor 80 is connected to
one end of the tertiary winding 13 of transformer 10 via
a series combination of a resistor 71 and capacitor 72.
The capacitor 72 is shunted by a series combination of
two similarly poled diodes 73a, 73b, and by a single
oppositely poled diode 74. Furthermore, instead of
being connected to the positive terminal 1 via the
resistor 37, the collector of transistor 80 is so
connected via a zener diode 57 in series with a resistor
58, the junction therebetween being decoupled by a
capacitor 59 and being connected to the collector of
transistor 20 via a series combination of a forward biased
diode 62 and a resistor 63. An inductor 64 is connected
between the base of transistor 20 and the collector of
transistor 80, the latter also having a series combination
of a reverse biased diode 65 and a resistor 66 connected
thereto and to the negative terminal 2, a resistor 67
shunting this series combination. The transistor 20
includes an emitter resistor 24 and a snubbing circuit
25 is connected between its collector and the positive
terminal 1, the snubbing circuit 25 including a capacitor 26 in series with a diode 27, a resistor 28 shunting the diode 27.

The transformer 10 is shown as including a further winding 14 connected via a reverse biased diode 15 between positive and negative terminals 1, 2, this winding 14 providing a protective effect which allows the use of smaller value components in the snubber circuit 25.

On the output side of the transformer 10, windings 12a, 12b are connected so as to provide a common rail connected to output terminal 5 as shown in Figure 7. Diodes 31, 32 are connected to winding 12a as previously described to provide a rectified source of current at their cathodes. The other end of winding 12b is connected via two like poled diodes 60a, 60b in series to the emitter of transistor 70, the collector of which is connected to the common rail. The base of transistor 70 is connected to control circuit 41'. The control circuit 41' receives a current representative signal from a series-parallel resistor combination 42, 43, 44 connected in the output line to terminal 4, and a voltage representative signal from a potential divider comprising fixed and settable resistors 45, 46 connected across the output terminals 4, 5. The control circuit 41' is preferably based around an integrated circuit power regulator IC1 such as an LM305. The current and voltage representative signals are fed to the regulator IC1 at pins 1, 8 and 6 respectively. A capacitor 38 is connected between pins 6 and 7. The regulator is connected to the base of a transistor 47 via a series combination of a resistor 48 and capacitor 49 from pin 5 thereof and a resistor 54 from pin 2. A resistor 68 and a capacitor 69 are connected in series between the collector of transistor 47 and pin 6 of the regulator. The regulator derives power at pin 3 from the winding 12a via a diode 75 decoupled by a capacitor 76. A resistor 77 is connected between the collector of transistor 47 and the common rail, and the signal developed across this resistor is used to control transistor 70 by being applied to the base thereof.

It has been stated hereinabove that the requirement of the circuit arrangement is to provide a voltage sink effect on the secondary winding(s) of the transformer. In the circuit shown in Figure 10 this is achieved by providing a transistor common-collector configuration which has the required impedance characteristics to provide a voltage sink. There is therefore no need to include a capacitor across the collector and emitter of transistor 70 as previously described. The control circuit 41' controls the conductance of transistor 70 and the voltage limit of the overswing voltage of transistor 20 is accordingly regulated in a similar manner to that described above.

The voltage regulation of regulator IC1 is performed by sensing the voltage developed across resistor 45 and producing a related output at pin 2 of the regulator. This output voltage at pin 2 controls transistor 47 which acts as a polarity inverter to control the conductance of transistor 70. However the regulator IC1 includes a further feature particularly applicable to the described circuit in that current control is performed by monitoring the current flow through resistor 44. This current flow will tend to be a triangular waveform, the pulse waveform derived from diodes 31, 32 having been integrated by the inductor 33. This waveform provides a particularly advantageous form of current control, as the triangular/waveform is compared within regulator IC1 with a reference threshold. As soon as the top part of the waveform exceeds the threshold, a limiting signal is fed to transistor 70, changing the overswing voltage limit within each cycle. This avoids problems of jitter about the threshold and spurious latching by controlling the current on a pulse by pulse basis rather than on an average current basis.

The circuit of Figure 10 further includes an overvoltage protection circuit 78 responsive to the voltage derived from a potential divider which consists of resistors 79, 81 connected in series across the output terminals 4, 5. This voltage is applied to pin 2 of an integrated circuit operational amplifier IC2/which such as an MC 3423 receives power at pin 1 from the winding 12a via a diode 84 decoupled by a capacitor 87. The base of an n.p.n. transistor 88 is connected via a resistor 89 to the common rail and via a resistor 91 to output pin 8 of the amplifier IC2. A series combination of resistor 92 and diode 93 connects pins 8 and 2, and a capacitor 94 is connected between pins 3, 4 and the common rail. Three like poled series connected diodes 95a, 95b, 95c are coupled between winding 12b and the collector of transistor 88.

The protection circuit 78 operates to detect an overvoltage at the output by deriving a related voltage from the junction of resistors 79 and 81. If the voltage is sufficiently large, the amplifier IC2 activates transistor 88 which provides a conductive path for the voltage derived at winding 12b via the diodes 95a, b, c, thereby overriding the control provided by transistor 70 and control circuit 41'. The voltage at the collector of transistor 20 is thereby limited and the overvoltage condition at the output accordingly terminated.

Further shown on Figure 10 is an auxiliary output winding 12c on the transformer 10. This may be used as illustrated to provide a second output which will be controlled in tandem with the remainder of the circuit but not regulated, since although the pulses induced in winding 13c will be similar to those in winding 12a, they will have been produced in response to output conditions at terminals 4 and 5, not the corresponding output of winding 12c. The winding 12c is connected via diodes 131, 132 and inductor 133, connected as previously described with reference to ccmponents 31, 32 and 33, to a standard three-terminal voltage regulator 134 such as one of the 7815 series. A capacitor 135 and resistor 136 are connected across the input and a capacitor 137 connected across the output of the regulator 134. The output at terminals 104, 105 is therefore controlled by the regulator 134 and not by the means previously described. Further similar auxiliary windings and associated rectifying and regulating circuits may be provided as required.

The circuit of Figure 10 includes an improved starting and resetting arrangement in transistor 80 and associated components. Rather than rely on transformer saturation to turn off transistor 20, capacitor 86 is charged via resistor 85, transistor 80 turning on once capacitor 86 is sufficiently charged. This turns off transistor 20. Diode 90 connected across resistor 85 is rendered conductive when the base of transistor 80 becomes positive with respect to the potential at winding 13, i.e. when transistor 20 is turned off. The base voltage of transistor 80 is then reset to a negative voltage dependent on the overswing voltage limit on the collector of transistor 20 as set by the control circuit 41'. When transistor 20 turns on after transformer reset, capacitor 86 charges from this negative voltage via resistor 85 to a voltage approximately 0.6V positive with respect to the emitter of transistor 80, whereupon transistor 80 turns on bringing an end to each switching cycle of transistor 20. A decrease in the overswing voltage limit will thus result in a decrease in the "ON" time and an increase in the "OFF" time, so that the circuit will operate at substantially constant frequency, but with a variable mark-space ratio dependent on the load presented to the inverter. When the inverter is initially switched on and power is applied to terminals 1 and 2, capacitor 59 is uncharged and zener diode 57 isolates the base of transistor 20 preventing spurious and uncontrolled turn on of this transistor. Once capacitor 59 has charged via resistor 58 to a voltage in excess of the breakdown voltage of zener diode 57 plus the requ.red base-emitter potential of transistor 20, the transistor will turn on and oscillation commences. Thereafter the rectifying action of diode 62 discharges capacitor 59 and disconnects the starter circuit 58 and 59 by reverse biasing the zener diode 57.

In the circuit of Figure 10, a number of diodes are shown connected in series chains, the effect of this being to match the forward potential drops across the PN junctions of the respective semiconductor combinations.

The various embodiments described have included alternative arrangements of output windings on the transformer 10. It is possible to apply the overswing voltage limiting to a single output winding as shown in Figures 6, 8 and 9 or to use tapped or separate windings as shown in Figures 7 and 10. In the latter case, the windings are shown connected together at one end to provide a common rail at that point, but this interconnection is not essential. It is possible to use an electrically isolated winding connected to the limiting diode and control circuit which need not be directly connected to the power output winding 12a. This isolated winding can then be used to apply overswing voltage limiting which is electrically insulated from the power output circuit elements.

CLAIMS:-

0018186

1. An inverter comprising a semiconductor switch oscillator (10,20) including a semiconductor switch (20) whose state of conduction is responsive to a control signal at a control terminal (23) thereof, a coupling transformer (10) arranged to provide oscillation maintaining feedback from a first winding (11) thereof disposed in the switched current path of the semiconductor switch (20) to a second winding (13) thereof arranged to provide said control signal, characterised in that a voltage limiting circuit (40,50 : or 41,70) is provided effectively to limit overswing voltage appearing at the first winding (11) of the coupling transformer (10) in such a manner as to control the non-conductive period of the semiconductor switch (20) within each operating cycle of the oscillations, thereby to control the output of the inverter.

2. An inverter according to claim 1, characterised in that the voltage limiting circuit includes a voltage sink circuit (50,56;or 70) connected to an output (12) of the coupling transformer (10), the voltage level ι of the voltage sink circuit determining the limit of overswing voltage at the first winding (11) of the coupling transformer (10).

3. An inverter according to claim 2, characterised in that the voltage sink circuit includes a semiconductor device (50 or 70) having a controllable voltage level between two terminals thereof.

4. An inverter according to claim 3, characterised in that the voltage sink circuit further includes a capacitor (56) connected across the two terminals of the semiconductor device (50).

5. An inverter according to claim 3, characterised in that the semiconductor device comprises a bipolar transistor (70) connected in common-collector mode thereby to provide a voltage sink effect.

6.        An inverter according to any one of claims 2 to 5, characterised in that the voltage limiting circuit includes a control circuit (40 or 41) responsive to at least one parameter of the inverter output so as to control the voltage sink circuit.

7.        An inverter according to claim 6, characterised in that the output (12) of the coupling transformer (10) is connected to an inductance (33) thereby to provide a triangular current waveform, the control circuit (41) comparing the triangular waveform with a reference threshold and activating the voltage sink circuit (70) to limit the overswing voltage within each operating cycle when the triangular waveform exceeds the reference threshold.

8.        An inverter according to any one of the preceding claims, characterised in that a resetting circuit (80, 85, 86) is provided to reset the semiconductor switch (20) thereby to end its conductive period within each operating cycle prior to saturation of the coupling transformer (10).

9.        An inverter according to claim 8, characterised in that the resetting circuit includes a capacitance (86) arranged to be charged from the second winding (13) of the coupling transformer (10), reset being provided when the capacitance reaches a predetermined state of charge.

10.       An inverter according to claim 9, characterised in that the resetting circuit further includes means (90) for providing an initial state of charge on the capacitance (86) within each operating cycle, the initial state of charge being dependent on the overswing voltage limit set by the voltage limiting circuit, thereby additionally to control the conductive period of the semiconductor switch (20).

11. An inverter according to one of claims 8, 9 or 10, characterised in that the resetting circuit (80, 85, 86) further includes a starting circuit (57,58,59) for providing an initial delay period after switch on of the inverter, the starting circuit inhibiting oscillation of the semiconductor switch (20) during the delay period.

12. An inverter according to claim 11, characterised in that the starting circuit includes a time constant circuit (58,59) for providing the delay period and being arranged to provide an increasing potential after initial switch on of the inverter, and a zener diode (57) coupled between the time constant circuit and the control terminal of the semiconductor switch (20) so as to hold the semiconductor switch (20) off during the delay period.

13. An inverter according to claim 11 or 12, characterised in that a diode (62) and resistor (63) are connected so as to inhibit the starting circuit (57, 58, 59) once oscillation has commenced.

Fig. I.

Fig. 2.

Fig. 3.

Fig. 4.

0018186

1/4

FIG. 5a.

FIG. 5b.

FIG. 6.

FIG. 7.

*FIG. 8.*

*FIG. 9.*

FIG. 10.

| Category | Citation of document with indication, where appropriate, of relevant passages | Relevant to claim |
|---|---|---|
| X | DE - B - 1 638 310 (WANDEL U. GOLTER-MANN) <br> * column 1, lines 1 to 11; column 2, lines 34 to 56; fig. 5 * | 1-3 |
| X | US - A - 3 590 362 (R.J. KAKALEC) <br> * summary of the invention; fig. 3 * | 1-3,6 |
| X | US - A - 3 818 314 (J.D. BISHOP et al.) <br> * abstract; fig. 3 * | 4 |
| | US - A - 3 699 424 (H.P. HART et al.) <br> * summary of the invention; fig. 2 * | 1 |
| A | US - A - 3 894 280 (J.D. BISHOP et al.) <br> * fig. 1 * | |
| A | US - A - 3 660 749 (F.V. KADRI) <br> * fig. 2 * | |

**DOCUMENTS CONSIDERED TO BE RELEVANT**

**CLASSIFICATION OF THE APPLICATION (Int. Cl.3)**

H 02 H 7/122
H 02 M 1/18
H 02 P 13/22
G 05 F 1/58

**TECHNICAL FIELDS SEARCHED (Int.Cl.3)**

G 05 F 1/58
H 02 H 7/122
H 02 H 7/20
H 02 M 1/18
H 02 P 13/22

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 30-06-1980 | LEMMERICH |

EPO Form 1503.1 06.78